**Europäisches Patentamt**

**European Patent Office**

**Office européen des brevets**

(19)

(11) Numéro de publication: **0 239 496
B1**

# (12) FASCICULE DE BREVET EUROPEEN

(45) Date de publication du fascicule du brevet:
**07.02.90**

(21) Numéro de dépôt: **87400678.6**

(22) Date de dépôt: **26.03.87**

(51) Int. Cl.⁴: **B29C 47/88**
// B29L23/00

(54) Procédé de refroidissement d'une gaîne tubulaire en matière thermoplastique et un dispositif pour sa mise en oeuvre.

(30) Priorité: **28.03.86 FR 8604498**

(43) Date de publication de la demande:
**30.09.87 Bulletin 87/40**

(45) Mention de la délivrance du brevet:
**07.02.90 Bulletin 90/6**

(84) Etats contractants désignés:
**AT BE CH DE ES FR GB GR IT LI LU NL SE**

(56) Documents cités:
**EP-A- 0 130 909
DE-A- 2 256 942
FR-A- 1 421 490
US-A- 3 307 218
US-A- 3 548 042**

(73) Titulaire: **NORSOLOR S.A., Tour Aurore Place des Reflets, F-92080 Paris la Défense Cédex 5(FR)**

(72) Inventeur: **Audureau, Joel, 50 rue des Normands, F-62290 Noeux les Mines(FR)**
Inventeur: **Morese-Seguela,Brigitte, Résidence la Jandrine No 11 Hinges, F-62400 Bethune(FR)**
Inventeur: **Hervais, Vincent, 39, rue Jean Bart, F-62160 Bully les Mines(FR)**

(74) Mandataire: **Dubost, Thierry, c/o NORSOLOR Service Propriété Industrielle B.P. 57, F-62670 Mazingarbe(FR)**

## Description

Il est déjà connu de refroidir une gaine tubulaire en matière thermoplastique provenant d'une filière annulaire d'extrusion-soufflage par laquelle flue la matière à l'état fondu, ladite gaine ayant dans la première phase de son refroidissement la forme d'un cylindre de diamètre sensiblement égal à celui de la filière.

Ainsi les brevets EP-A-0041803 et EP-A-0077661 décrivent des dispositifs ayant en commun de présenter une chambre basse cylindrique close entourant la gaine à sa sortie de la filière et un anneau de soufflage dirigeant l'air de refroidissement perpendiculairement à la gaine à sa sortie de la chambre basse. Dans le premier brevet cité le dispositif comprend en outre une chambre haute posée sur l'anneau de soufflage et dirigeant l'air tangentiellement à la gaine après gonflage de celle-ci. La chambre haute décrite dans le second document cité a la particularité de ne pas être jointive avec l'anneau de soufflage et de laisser ainsi pénétrer un air induit complémentaire.

Le document FR-A-1421490 décrit un dispositif comprenant un anneau tournant de soufflage d'air situé immédiatement à la sortie de la filière et, intercalée entre cet anneau et la gaine à refroidir, une collerette formant déflecteur et déviant l'air de refroidissement tangentiellement à la gaine. Le document US-A-3307218 décrit un appareil comprenant une feuille cylindrique verticale entourant la gaine lorsqu'elle a atteint son diamètre maximum muni d'un dispositif permettant d'insuffler de l'air parallèlement à la gaine de façon à la refroidir en dessous de sa température de déformation.

Le brevet EP-A-0130909 décrit un dispositif comprenant à sa partie intermédiaire un anneau de soufflage intensif dont le flux est dirigé vers la gaine et à sa partie supérieure une chambre haute dans laquelle la gaine est en contact avec le flux d'air dirigé dans la direction de tirage de la gaine. Le dispositif comprend en outre à sa partie inférieure une chambre basse non close munie d'au moins une ouverture.

Les dispositifs décrits dans les deux premiers documents cités présentent l'inconvénient de ne pouvoir améliorer les propriétés optiques du film obtenu à partir de la gaine que pour des matériaux thermoplastiques conduisant déjà à des films dont les propriétés optiques étaient déjà relativement satisfaisantes, lorsqu'obtenus à l'aide d'un système classique de refroidissement.

Le dernier document cité décrit un dispositif qui permet de pallier cet inconvénient. Mais on s'est aperçu à l'usage que de très légers défauts pouvaient apparaître dans les films obtenus à partir de la gaine telle une faible irrégularité dans l'épaisseur.

Le procédé et le dispositif selon l'invention ont pour but d'améliorer l'uniformité de l'épaisseur de la gaine tout en conservant, sinon en améliorant les propriétés optiques.

La présente invention a pour objet un procédé de refroidissement d'une gaine tubulaire obtenue par extrusion-soufflage à chaud d'une matière thermoplastique à travers une filière annulaire, ladite gaine ayant dans une première phase la forme d'un cylindre de diamètre sensiblement égal à celui de la filière, dans une deuxième phase sensiblement la forme d'un tronc de cône et dans une troisième phase la forme d'un cylindre de même axe que celui de la première phase et de diamètre supérieur à lui, procédé mettant en œuvre un flux d'air primaire sous pression et un flux d'air secondaire induit par ledit flux d'air primaire, ledit flux d'air primaire atteignant la gaine au cours de la deuxième phase, le flux d'air secondaire induit étant parallèle à la gaine au cours de la première phase du refroidissement, circulant dans le même sens que celle-ci et étant laminaire sur la plus grande partie de son trajet, procédé caractérisé en ce que la somme des flux d'air secondaire induit est canalisée vers la gaine pendant le début de la troisième phase.

La matière thermoplastique est notamment choisie parmi le polyéthylène basse densité obtenu par voie radicalaire, les copolymères de l'éthylène et de co-monomères polaires tels l'acétate de vinyle, les esters des acides acrylique et méthacrylique, l'anhydride maléique, l'oxyde de carbone, ou bien les copolymères de l'éthylène et d'α-oléfines comportant de 3 à 12 atomes de carbone obtenus par catalyse Ziegler et encore appelés polyéthylènes basse densité linéaires. On peut également utiliser divers mélanges de ces polyéthylènes et copolymères, à la condition bien connue de l'homme de l'art que leur indice de fluidité, mesuré selon la norme ASTM D 1238–73 à 190°C sous une charge de 2,16 Kg soit compris entre 0,1 et 10 dg/min.

Le flux d'air primaire, qui est généralement à température ambiante, atteint la gaine au cours de la deuxième phase de son refroidissement, c'est-à-dire au moment où son diamètre passe d'une valeur sensiblement égale au diamètre de la filière à une valeur correspondant au diamètre final, fonction du taux de gonflage. L'angle du flux d'air primaire avec la paroi de la gaine peut être compris entre 90° et 0°, la circulation de ce flux ayant lieu dans le sens de tirage de la gaine.

Le flux d'air secondaire, induit par le flux d'air primaire, atteint la gaine dans sa première phase de refroidissement, avantageusement le plus près possible de la filière d'extrusion.

Au cours de la première phase de refroidissement, le rapport entre la longueur et le diamètre du cylindre constitué par la gaine est avantageusement compris entre 1 et 10, de manière encore plus avantageuse entre 2 et 7 et, de préférence voisin de 4.

Avantageusement le flux d'air secondaire induit est laminaire sur au moins 80% de son trajet. Ceci signifie qu'il peut y avoir quelques turbulences dans le flux d'air mais qu'elles sont limitées et circonscrites au niveau de la sortie de la filière d'extrusion. Le rapport volumique du flux d'air secondaire induit au flux d'air primaire est avantageusement compris entre 0,01 et 0,2. Le flux d'air secondaire rejoint le flux d'air primaire au moment où la gaine s'évase; la somme des flux d'air primaire et d'air secondaire induit est alors canalisée vers la gaine pendant la troisième phase de refroidissement.

Le procédé selon l'invention permet d'obtenir des films qui, tout en conservant les bonnes propriétés optiques obtenues à l'aide du dispositif selon le document EP-A 0 130 909, présentent une plus grande uniformité dans leur épaisseur.

La présente invention a également pour objet un dispositif pour la mise en œuvre du procédé décrit ci-dessus, comprenant une filière annulaire (1) disposée à l'extrémité d'une machine d'extrusion (2), un anneau cylindrique (3), comportant au moins un orifice (4), posé sur ladite filière coaxialment avec elle, un premier manchon cylindrique (5) coaxial avec la filière (1) et reposant sur l'anneau (3), caractérisé en ce qu'il comprend, en outre un second manchon cylindrique (6) coaxial au premier et de diamètre supérieur à celui-ci, l'espace entre le premier et le second manchon étant muni à sa partie inférieure d'au moins un dispositif de raccordement (7) à une source d'air sous pression, et en ce que l'ouverture de l'orifice (4) est réglable.

L'ensemble formé par la filière annulaire (1) et la machine d'extrusion (2) est bien connu de l'homme de l'art. La filière annulaire est traversée par un conduit (9) permettant d'insuffler de l'air sous pression à l'intérieur de la gaine, à une hauteur préalablement choisie, de façon à provoquer le gonflage de la gaine.

L'ouverture de l'orifice (4) de l'anneau cylindrique (3) est réglable par tout moyen connu tel qu'un tiroir de forme également cylindrique. De façon à permettre l'arrivée d'air induit, la position extrême du dispositif d'occultation de l'orifice (4) est telle qu'un léger flux d'air peut pénétrer dans le dispositif.

Le premier manchon cylindrique (5), dont la hauteur est au moins égale au diamètre, avantageusement comprise entre 1 et 10 fois, mieux, entre 2 et 7 fois et de préférence d'environ 4 fois le diamètre, repose coaxialment avec la filière (1) sur l'anneau (3). La liaison est avantageusement étanche et peut être réalisée par soudage ou brasage. Les deux éléments (3) et (5) peuvent également ne former qu'une seule et même pièce obtenue directement par usinage.

Les premier (5) et second (6) manchons cylindriques peuvent être constitués chacun d'une seule pièce. Avantageusement ils sont composés de plusieurs parties. La partie inférieure du manchon (5) peut être obtenue d'une seule pièce avec l'anneau (3) ; les éléments intermédiaires et supérieur du manchon (5) sont alors avantageusement constitués de cylindres emboîtables et montés successivement sur cette partie inférieure.

De façon à permettre un démontage aisé de l'installation, l'un ou l'autre des deux manchons (5) et (6), ou bien les deux, sont avantageusement munis d'un dispositif permettant leur ouverture selon une génératrice. Il s'agit donc dans ce cas de deux demi-cylindres reliés d'une part au moyen par exemple d'une charnière et d'autre part au moyen d'un fermoir. Si chacun du premier (5) et second (6) manchons est constitué de cylindres emboîtables, chaque cylindre peut être ainsi muni d'un dispositif d'ouverture selon une génératrice.

L'extrémité supérieure du manchon (5) est située au niveau où la gaine de matière thermoplastique entre dans la deuxième phase de refroidissement, c'est-à-dire commence à s'évaser. De façon à éviter que la gaine tombe sous l'effet de la pesanteur, l'extrémité supérieure du manchon (6) est située de préférence à un niveau supérieur à celui de l'extrémité supérieure du manchon (5), la surface fictive délimitée par les extrémités supérieures des deux manchons formant un tronc de cône enveloppant la gaine lors de la deuxième phase du refroidissement.

Selon une autre variante de l'invention, la partie supérieure de l'un des manchons (5) et (6), ou des deux, a la forme d'un tronc de cône évasé vers le haut.

Avantageusement, une autre variante de l'invention consiste à poser (par exemple par emboîtement) une chicane (8) sur l'extrémité supérieure du manchon (6). On entend par chicane un dispositif qui a pour fonction de canaliser le long de la gaine la somme des flux d'air primaire et secondaire induit, pendant le début de la troisième phase du refroidissement. Il peut s'agir d'un manchon en forme de tronc de cône évasé vers le haut, prolongé ou non au moyen d'un manchon cylindrique dont le diamètre est supérieur à celui de la gaine au cours de la troisième phase.

Il peut également s'agir d'un dispositif comportant une succession d'anneaux cylindriques de diamètres croissants disposés coaxialement avec la filière, la partie basse d'un anneau de diamètre donné empiétant ou non sur la partie haute de l'anneau situé immédiatement en-dessous. Selon une variante au moins un anneau, de préférence chaque anneau, est relié à l'anneau supérieur par une surface plane.

Selon une autre variante préférée les anneaux sont reliés entre eux et à la partie supérieure du manchon (6) par au moins deux pattes de fixation (10) ayant un profil en "marches d'escalier" et comportant des orifices oblongs verticaux pour le passage de vis de fixation permettant le réglage en hauteur des anneaux. Selon cette variante un léger flux d'air circule verticalement de bas en haut entre chaque anneau.

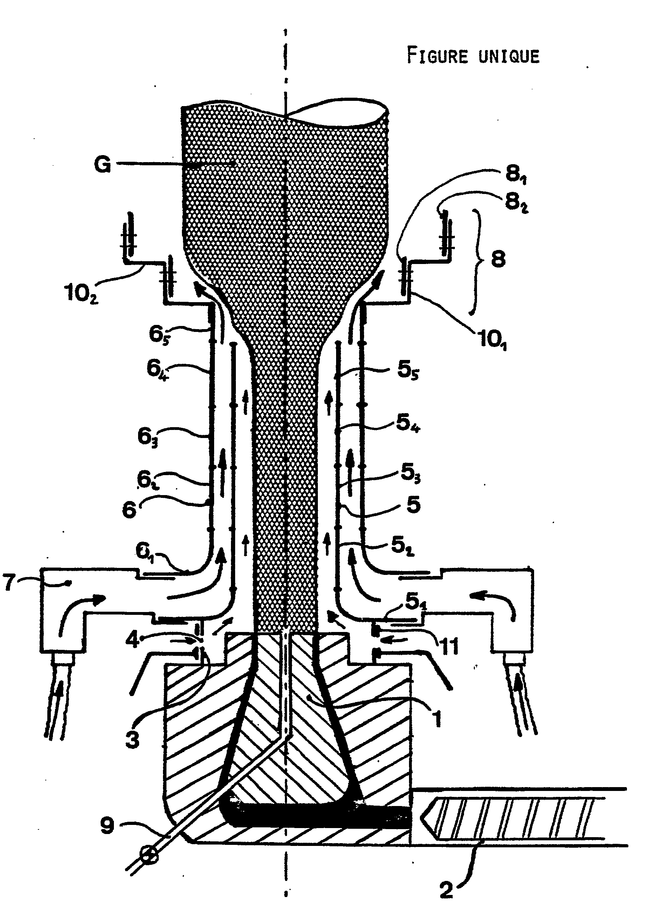

Le dispositif selon l'invention peut en outre être muni d'un dispositif de refroidissement interne tel que celui décrit à la figure 2 du document EP-A 0 130 909. Dans ce cas les manchons (5) et (6) sont formés d'éléments de préférence emboîtables et pouvant être ouverts selon une génératrice.

L'invention sera maintenant expliquée au regard de la figure unique en annexe.

Le dispositif particulier illustrant une variante non limitative de l'invention et représenté sur la figure en annexe comprend :

- un filière annulaire (1) disposée à l'extrémité de l'extrudeuse (2) et comportant un conduit (9) de gonflage de la gaine,
- un anneau cylindrique (3) comportant plusieurs orifices (4) dont l'ouverture est réglable simultanément au moyen d'un dispositif à tiroir comprenant un anneau cylindrique (11) lui-même perforé. Des taquets limitent le mouvement de l'anneau (11) de façon que la fermeture des orifices (4) ne soit jamais complète,
- un premier manchon cylindrique (5) formé d'une base ($5_1$) et de quatre cylindres emboîtables ($5_2$, $5_3$, $5_4$, $5_5$),
- un second manchon cylindrique (6) formé d'une base ($6_1$) et de quatre cylindres emboîtables ($6_2$, $6_3$, $6_4$, $6_5$),
- un dispositif d'alimentation en air sous pression (7) de l'espace situé entre les manchons (5) et (6)
- une chicane (8) comprenant deux anneaux cylindriques ($8_1$, $8_2$) reliés entre eux et au cylindre supérieur ($6_5$) au moyen de deux pattes de fixation ($10_1$, $10_2$) en forme de "marches d'escalier".

La gaine de matière thermoplastique est schématisée par le repère G.

Après démarrage (tirage de l'amorce de la gaine, passage entre les rouleaux presseurs non représentés et gonflage de la gaine), le dispositif fonctionne en régime continu de la façon suivante. Un flux d'air primaire est introduit sous pression par le dispositif d'alimentation (7). Il parcourt l'espace entre les manchons (5) et (6) et atteint la gaine au moment où celle-ci s'évase. La sortie du flux d'air primaire induit par aspiration un flux d'air secondaire pénétrant par les orifices (4) dans l'espace situé entre la gaine et le manchon (5). Le flux d'air secondaire est laminaire et rejoint le flux d'air primaire à la partie supérieure du manchon (5). La somme des flux est alors canalisée vers l'atmosphère par la chicane (8).

Les exemples suivants montrent les avantages du procédé selon l'invention et de l'utilisation du dispositif décrit ci-dessus.

Exemples 1 à 3

On a extrudé au moyen du dispositif représenté à la figure unique en annexe, muni d'une filière de 150 mm de diamètre et de 0,8 mm d'entrefer, des polyéthylènes de basse densité obtenus par voie radicalaire et dont l'indice de fluidité (IF), mesuré selon la norme ASTM D 1238-73 et exprimé en dg/min., et la densité (d) figurent au tableau I. Le taux de gonflage (rapport du diamètre de la gaine dans la troisième phase de refroidissement à celui de la filière) est égal à 2.

On a également indiqué dans le tableau I :

- la rapport volumique V du flux d'air secondaire induit au flux d'air primaire.
- le débit de polyéthylène Q (exprimé en kg/h)
Les gaines obtenues sont exemptes de défauts optiques.
On a mesuré sur les films obtenus :
- le profil d'épaisseur (E) exprimée en micromètres
- la résistance à l'impact $R_i$, mesurée selon la norme NFT 54109 et exprimée en grammes.

**Tableau I**

| Exemple | Pebd IF | d | V | Q | E | $R_i$ |
|---------|---------|-------|------|-----|----------|-------|
| 1 | 2,1 | 0,923 | 0,1 | 66 | $28^{+3}$ | 107 |
| 2 | 0,6 | 0,922 | 0,04 | 109 | $32^{+4}$ | 207 |
| 3 | 0,26 | 0,922 | 0,04 | 110 | $30^{+5}$ | 197 |

Exemples comparatifs 4 à 6

On a transformé en gaines les mêmes polyéthylènes qu'aux exemples 1 à 3, respectivement, en utilisant le dispositif décrit dans le document EP-A-130909 à l'exemple 13, avec un taux de gonflage égal à 2.
On avait les données et on a obtenu les résultats figurant au tableau II.

**Tableau II**

| Exemple | V | Q | E | $R_i$ |
|---------|------|-----|------------|-------|
| 4 | 0,29 | 132 | $30^{+5}$ | 67 |
| 5 | 0,26 | 102 | $35^{+10}$ | 101 |
| 6 | 0,26 | 108 | $32^{+7}$ | 85 |

Le procédé et le dispositif selon l'invention permettent, par rapport au dispositif du document EP-A-0130909, et tout en conservant les bonnes propriétés optiques du film, d'obtenir un film ayant un profil d'épaisseur plus régulier et une résistance à l'impact améliorée.

Ces résultats sont obtenus à l'aide d'un dispositif qui, tout en étant d'une hauteur plus faible, permet d'atteindre des débits linéaires de matière plus élevés à débit massique constant ; la gaine obtenue a donc ainsi une épaisseur plus faible. Ces débits linéaires peuvent encore être augmentés en allongeant la hauteur des manchons (5) et (6).

Exemple 7

On a transformé avec le même dispositif qu'aux exemples 1 à 3 en gaine d'épaisseur 30μm un polyéthylène de basse densité obtenu par voie radicalaire, commercialisé sous la dénomination LOTRENE FX 429 par la Société CdF CHIMIE E.P. et ayant un indice de fluidité de 0,42 dg/min et une densité de 0,922. Le film obtenu, qui possède un profil d'épaisseur très régulier, présente un trouble optique (mesuré selon la norme ASTM D 1003) de seulement 2%.

A titre comparatif, le même polyéthylène transformé en gaine en utilisant un dispositif de refroidissement classique par soufflage d'air directement au niveau de la sortie de filière conduit à un film présentant un trouble de 6%.

**Revendications**

1. Procédé de refroidissement d'une gaine tubulaire obtenue par extrusion-soufflage à chaud d'une matière thermoplastique à travers une filière annulaire, ladite gaine ayant dans une première phase la forme d'un cylindre de diamètre sensiblement égal à celui de la filière, dans une deuxième phase sensiblement la forme d'un tronc de cône et dans une troisième phase la forme d'un cylindre de même axe que celui de la première phase et de diamètre supérieur à lui, procédé mettant en œuvre un flux d'air primaire sous pression et un flux d'air secondaire induit par ledit flux d'air primaire, ledit flux d'air primaire atteignant la gaine au cours de la deuxième phase, le flux d'air secondaire induit étant parallèle à la gaine au cours de la première phase du refroidissement, circulant dans le même sens que celle-ci et étant laminaire sur la plus grande partie de son trajet, procédé caractérisé en ce que la somme des flux d'air primaire et d'air secondaire induit est canalisée vers la gaine pendant le début de la troisième phase.

2. Procédé selon la revendication 1, caractérisé en ce que le flux d'air secondaire induit est laminaire sur au moins 80% de son trajet.

3. Procédé selon l'une des revendications 1 et 2, caractérisé en ce que le rapport volumique du flux d'air secondaire induit au flux d'air primaire est compris entre 0,01 et 0,2.

4. Dispositif pour la mise en œuvre du procédé selon l'une des revendications 1 à 3, comprenant une filière annulaire (1) disposée à l'extrémité d'une machine d'extrusion (2), un anneau cylindrique (3), comportant au moins un orifice (4), posé sur ladite filière coaxialement avec elle, un premier manchon cylindrique (5) coaxial avec la filière (1) et reposant sur l'anneau (3), caractérisé en ce qu'il comprend, en outre un second manchon cylindrique (6) coaxial au premier et de diamètre supérieur à celui-ci, l'espace entre le premier et le second manchon étant muni à sa partie inférieure d'au moins un dispositif de raccordement (7) à une source d'air sous pression, et en ce que l'ouverture de l'orifice (4) est réglable.

5. Dispositif selon la revendication 4, caractérisé en ce que l'un ou l'autre ou les deux manchons (5) et (6) sont composés de plusieurs parties.

6. Dispositif selon la revendication 5, caractérisé en ce que lesdites parties sont des cylindres emboîtables.

7. Dispositif selon l'une des revendications 4 à 6, caractérisé en ce que l'un ou l'autre ou les deux manchons (5) et (6) sont munis d'un dispositif permettant leur ouverture selon une génératrice.

8. Dispositif selon l'une des revendications 4 à 7, caractérisé en ce que l'extrémité supérieure du manchon (6) est située à un niveau supérieur à celui de l'extrémité supérieure du manchon (5).

9. Dispositif selon l'une des revendications 4 à 8, caractérisé en ce que la partie supérieure de l'une des manchons (5) et (6), ou des deux a la forme d'un tronc de cône évasé vers le haut.

10. Dispositif selon l'une des revendications 4 à 9, caractérisé en ce qu'il comprend en outre une chicane (8) posée sur l'extrémité supérieure du manchon (6).

11. Dispositif selon la revendication 10, caractérisé en ce que la chicane (8) est formée d'une succession d'anneaux cylindriques de diamètres croissants disposés coaxialement avec la filière et reliés entre eux et à la partie supérieure du manchon (6) par au moins deux pattes de fixation.

**Claims**

1. Process for cooling a tubular sleeve produced by hot extrusion-blowing of a thermoplastic material through an annular die, the said tube being, in a first stage, in the shape of a cylinder with a diameter substantially equal to that of the die, in a second stage substantially in the shape of a conical frustum and in a third stage in the shape of a cylinder with the same axis as that of the first stage and with a diameter greater than the latter, with the process employing a stream of primary air under pressure and a stream of secondary air induced by the said stream of primary air, the said stream of primary air reaching the tube during the second stage, the induced stream of secondary air being parallel to the tube during the first cooling stage, travelling in the same direction as the latter and being laminar over most of its path, which process is characterized in that the combined stream of primary air and of induced secondary air is channelled towards the tube during the start of the third stage.

2. Process according to claim 1, characterized in that the induced stream of secondary air is laminar over at least 80% of its path.

3. Process according to either of claims 1 and 2, characterized in that the volume ratio of the induced secondary air stream to the primary air stream is between 0.01 and 0.2.

4. Device for making use of the process according to one of claims 1 to 3, comprising an annular die (1) arranged at the end of an extruder (2), a cylindrical ring (3) comprising at least one orifice (4), placed on the said die coaxially with the latter, a first cylindrical sleeve (5) coaxial with the die (1) and resting on the ring (3), characterized in that it comprises, in addition, a second cylindrical sleeve (6) coaxial with the first and with a diameter greater than the latter, the space between the first and the second sleeve being provided, in its lower part, with at least one device for connecting (7) to a source of air under pressure, and in that the opening of the orifice (4) is adjustable.

5. Device according to claim 4, characterized in that either or both of the sleeves (5) and (6) consist of several sections.

6. Device according to claim 5, characterized in that the said sections are cylinders capable of fitting into each other.

7. Device according to one of claims 4 to 6, characterized in that either or both of the sleeves (5) and (6) are provided with a device enabling them to be opened along a generatrix.

8. Device according to one of claims 4 to 7, characterized in that the upper end of the sleeve (6) is situated at a height greater than that of the upper end of the sleeve (5).

9. Device according to one of claims 4 to 8, characterized in that the upper end of one of the sleeves (5) and (6), or of both, is in the shape of a conical frustum widening upwards.

10. Device according to one of claims 4 to 9, characterized in that it further comprises a baffle (8) placed on the upper end of the sleeve (6).

11. Device according to claim 10, characterized in that the baffle (8) consists of a succession of cylindrical rings of increasing diameters arranged coaxially with the die and connected to each other and to the upper part of the sleeve (6) by at least two fastening straps.

## Patentansprüche

1. Verfahren zum Kühlen eines durch Warm-Extrusionsblasen eines thermoplastischen Kunststoffs durch eine Ringdüse erhaltenen Folienschlauchs, wobei der Schlauch in einer ersten Phase die Form eines Zylinders mit einem Durchmesser aufweist, der im wesentlichen gleich ist jenem der Düse, in einer zweiten Phase im wesentlichen die Form eines Kegelstumpfes und in einer dritten Phase die Form eines Zylinders besitzt, der achsgleich mit dem der ersten Phase ist und einen größeren Durchmesser als dieser aufweist, bei welchem Verfahren ein Primärluftstrom unter Druck und ein vom Primärluftstrom induzierter Sekundärluftstrom zum Einsatz kommen, wobei der Primärluftstrom während der zweiten Phase auf den Schlauch trifft und der induzierte Sekundärluftstrom während der ersten Kühlphase sich parallel zum Schlauch und in der gleichen Richtung wie dieser bewegt und über den größten Teil seines Weges laminar ist, dadurch gekennzeichnet, daß die Summe des Primärluftstromes und des induzierten Sekundärluftstromes während des Beginns der dritten Phase gegen den Schlauch gelenkt wird.

2. Verfahren nach Anspruch 1, dadurch gekennzeichnet, daß der induzierte Sekundärluftstrom auf mindestens 80% seines Weges laminar ist.

3. Verfahren nach Anspruch 1 oder 2, dadurch gekennzeichnet, daß das Mengenverhältnis des induzierten Sekundärluftstromes zum Primärluftstrom zwischen 0,01 und 0,2 beträgt.

4. Vorrichtung zur Durchführung des Verfahrens nach einem der Ansprüche 1 bis 3, mit einer am Ende einer Extrudiermaschine (2) angeordneten Ringdüse (1), einem mindestens eine Öffnung (4) aufweisenden zylindrischen Ring (3), der auf die Düse (1) koaxial mit dieser aufgesetzt ist, und einer mit der Düse (1) koaxialen ersten zylindrischen Hülse (5), die auf dem Ring (3) ruht, dadurch gekennzeichnet, daß sie weiters eine mit der ersten Hülse koaxiale zweite zylindrische Hülse (6) mit einem Durchmesser umfaßt, der größer ist als jener der ersten Hülse, wobei der Zwischenraum zwischen der ersten und der zweiten Hülse an seinem unteren Ende mit mindestens einer Einrichtung (7) zum Anschluß an eine Druckluftquelle versehen ist und daß die lichte Weite der Öffnung (4) einstellbar ist.

5. Vorrichtung nach Anspruch 4, dadurch gekennzeichnet, daß die eine oder andere oder beide Hülsen (5) und (6) aus mehreren Teilen zusammengesetzt sind.

6. Vorrichtung nach Anspruch 5, dadurch gekennzeichnet, daß die genannten Teile ineinandersteckbare Zylinder sind.

7. Vorrichtung nach einem der Ansprüche 4 bis 6, dadurch gekennzeichnet, daß die eine oder andere oder beide Hülsen (5) und (6) mit einer Einrichtung versehen sind, die ihr Öffnen längs einer Erzeugenden erlaubt.

8. Vorrichtung nach einem der Ansprüche 4 bis 7, dadurch gekennzeichnet, daß das obere Ende der Hülse (6) auf einem höheren Niveau angeordnet ist als das obere Ende der Hülse (5).

9. Vorrichtung nach einem der Ansprüche 4 bis 8, dadurch gekennzeichnet, daß der obere Teil der einen der Hülsen (5) und (6) oder beider Hülsen die Form eines sich nach oben erweiternden Kegelstumpfes besitzt.

10. Vorrichtung nach einem der Ansprüche 4 bis 9, dadurch gekennzeichnet, daß sie weiters eine auf das obere Ende der Hülse (6) aufgesetzte Schikane (8) umfaßt.

11. Vorrichtung nach Anspruch 10, dadurch gekennzeichnet, daß die Schikane (8) aus einer Folge von zylindrischen Ringen mit zunehmenden Durchmessern gebildet ist, welche Ringe koaxial mit der Düse angeordnet und untereinander und mit dem oberen Teil der Hülse (6) durch mindestens zwei Befestigungslaschen verbunden sind.

FIGURE UNIQUE